# EUROPEAN PATENT APPLICATION

(11) **EP 4 729 987 A1**
(43) Date of publication of application: **22.04.2026**
(21) Application number: 24207064.7
(22) Date of filing: 16.10.2024
(51) Int. Cl.: G01S 13/72, G01S 13/931

(54) **RADAR SYSTEM AND METHOD FOR FREESPACE OCCUPANCY DETECTION**

(71) Applicant: Provizio Limited, V94 VY47 Limerick (IE)
(72) Inventor: The designation of the inventor has not yet been filed
(74) Representative: Purdylucey Intellectual Property

(57) **Abstract**

Disclosed is a method of estimating an unoccupied area around a sensor. The method includes measuring a radar point cloud of a scene around the sensor, using the sensor; identifying a set of clusters within the radar point cloud; defining a boundary around each cluster to obtain a set of inner hulls corresponding to the set of clusters, defining a global point cloud boundary around an outer limit of the radar point cloud to obtain an outer hull, wherein the outer hull is formed by connecting a plurality of outer hull points; identifying a plurality of connecting edges of the outer hull, wherein each connecting edge is present in the outer hull, and absent in the plurality of inner hulls; forming a free space polygon by traversing through the plurality of inner hull points of each hull and the connecting edges, wherein the free space polygon indicates the unoccupied area around the sensor.

## Description

### Field

The present invention relates to a method of electronically sensing the surrounding environment of a vehicle, and more specifically to freespace occupancy detection around a vehicle.

### Background of Invention

Freespace or driveable space is a critical concept for autonomous driving. It refers to the area around a self-driving vehicle, or ego-vehicle, which can be safely approached or operated in, and is used to inform autonomous driving decisions such as the direction in which the vehicle can be moved in, the obstacles around the vehicle, and how can the obstacles be avoided.

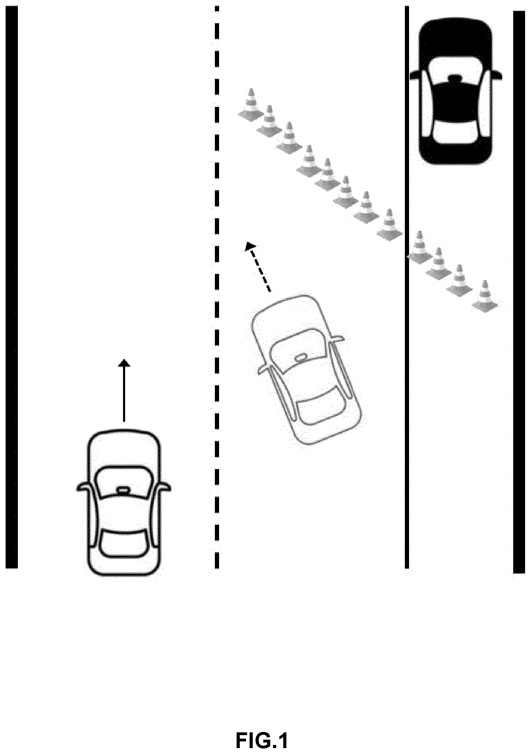

The concept of free space is further illustrated with reference to FIG. 1 , which shows thick lines to represent the physical road boundary which would result in a collision, if an attempt were made to cross it. Physical road boundaries can take many forms such as a metal crash barrier or kerb stones. Road markings, such as the lane lines, are also shown. For freespace purposes, vehicles must keep within the physical road boundaries at all times, even though vehicles may not be legally permitted to drive beside these, such as in the case of an emergency lane where a vehicle is shown parked.

On the road, there may be dynamic objects and static objects which may be detected by the ego-vehicle's sensors. Dynamic objects describe all types of objects in motion with respect to the road such as cars, lorries, pedestrians etc., while static objects are stationary objects that may include parked vehicles, traffic cones, traffic lights, signs etc. The identification of freespace is therefore the identification of the physical road boundaries and all the objects within it so that the free area, in which the ego-vehicle is free to move to, is identified. Of course, this is a simplistic, instantaneous view that does not account for the movement of the detected objects at each instance, and which must be predicted and updated for a useable output.

The technique can be used as a method to detect all obstacles that can be detected by the vehicle's sensors, regardless of the class of object or if the object has been encountered previously. This is in contrast to other methods that attempt to classify object types, and miss unexpected obstacles because they do not have a clear object class or have not been encountered previously.

There are two mainstream approaches to develop freespace algorithms that can generally be divided between using HD maps that are pre-processed and created offline, or generating a real-time map using onboard sensors. When HD maps are used, the ego-vehicle's sensors (typically GPS) are relied upon to deliver high-precision localisation (or the process of estimating the location of sensors in the nearby area) to predict where static obstacles might be. When an online map is created, the ego-vehicle's sensors (typically camera, LiDAR or radar) are used to estimate the position of static objects. Both methods offer advantages and challenges with the choice of approach dependent on the usage, application, cost and the availability of computational resources.

Real-time maps are generally chosen for mass-production markets or autonomous driving solutions for several reasons. The HD maps can become outdated within a matter of seconds because obstacles such as debris or parked cars are not captured in these maps. Furthermore, accurate localisation might not be available in certain environments like tunnels or parking garages which prevents the use of HD maps entirely.

It is this general, real-time mapping approach that is the subject of this invention. Here, most of the prior art is concerned with converting 3D sensor data into a 2D BEV (Bird's eye view) image to include road boundaries and layout, or to convert 2D images into the 3D space to characterise the slope of the road. However, most of these approaches have limitations including distance projection inaccuracies (2D to 3D), and projection size inaccuracies (2D to 3D).

Although challenging, these errors may be tolerable at closer ranges and therefore this technology is used widely for low-speed parking which has only a moderate range requirement. In high-speed or urban driving scenarios, however, the complex scenario commands a shorter response time and longer range, and thus other calculation methods are required.

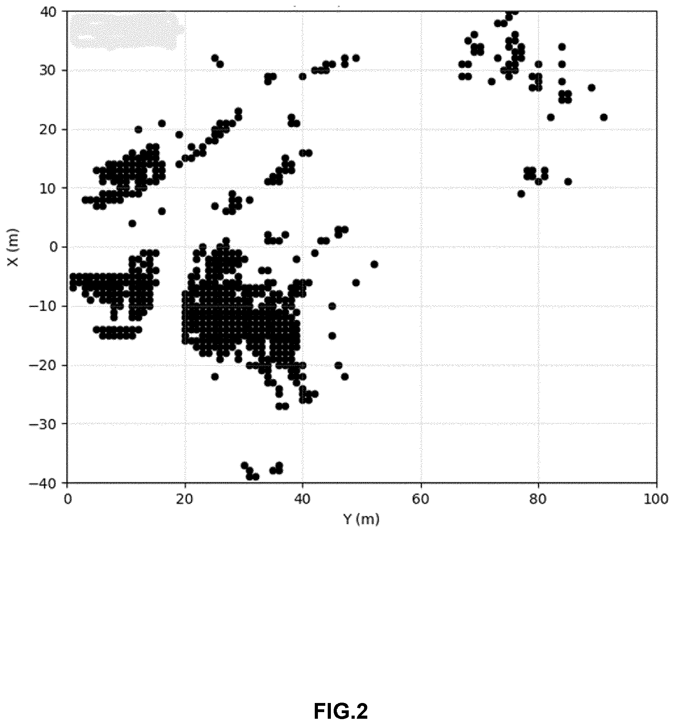

One such prior-art method is the idea of using an occupancy grid which has been first applied to Sonar sensors and uses sensor data to assess if an object occurs at a specific grid point in a 2D BEV grid. FIG.2 illustrates an occupancy grid for a typical radar sensor scene measurement, or point cloud. It is obvious that occupancy grids can be readily deployed for radar and LiDAR sensors, but they have also been deployed for camera systems as well. As all obstacles around the vehicle can be displayed in an occupancy grid, the technique has advantages in detecting general obstacles which have no clear classification or obstacles with irregular shapes. There are many versions of occupancy grids which may be adapted to include the probability of each grid space being occupied, the prediction of the motion flow for each grid space which is used to describe the motion of unknown obstacles, and anticipating ghost targets in occluded areas anticipated by inference.

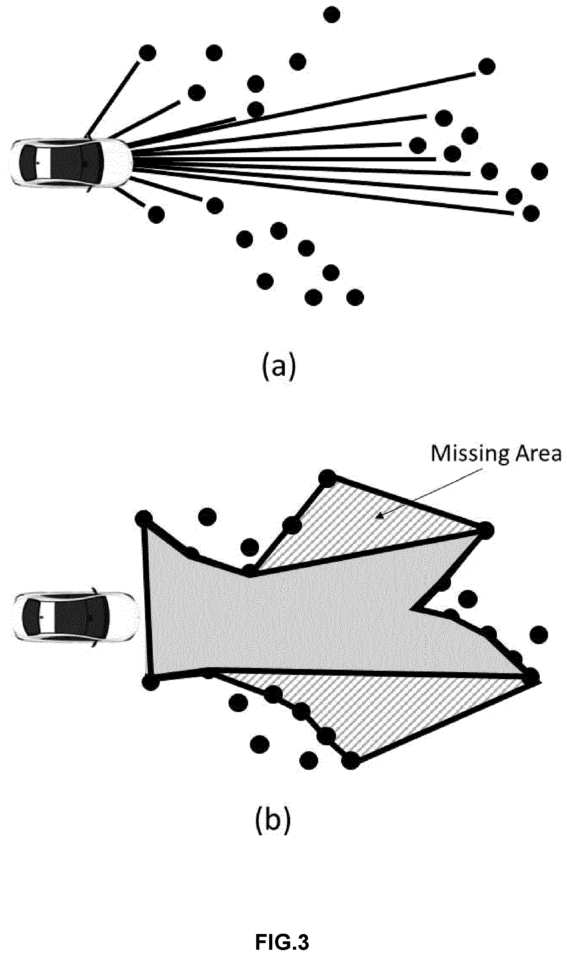

Ray tracing has also been widely used in light-based systems such as LiDAR to create freespace maps. FIGs.3a and 3b shows the effect and limitations of a ray tracing calculation in a 2D BEV, where the freespace is calculated based on the first detected point from the sensor. However, since some points may be behind these points, or in their 'shadows', they are ignored from the calculation. FIG.3b shows this effect when the calculated freespace area is drawn and is compared to a full freespace area which will not be fully detected.

To avoid the effect of missing shadowed points from ray tracing methods, another method of determining freespace in sensors is to use the RANSAC, or Random sample consensus algorithm to determine the freespace boundary. RANSAC is a well-known iterative method which estimates a model from a set of observed data, in this case the point cloud, while identifying points or outliers that do not conform to the model. By using iteration, the model can be refined more fully so that only the most likely outliers are removed. An example of a RANSAC freespace calculation of the same point cloud shown in FIGs. 3a and 3b. Although this method gives an improvement in freespace identification when compared to the ray tracing method, this algorithm tends to incorrectly identify occupied areas as freespace more often. Furthermore, the algorithm tends to fail when there are not two well-defined sides to the road, due to assumptions that it makes about the structure of the road.

Although freespace algorithms have generally only been deployed with inputs to their calculations coming from light-based sensors such as cameras or LiDARs due to the sparser or more widely spaced point clouds derived from radars, the current invention is deployed using only radar-based point clouds and shows a step change improvement of the limitations of these previous freespace calculation methods even without the addition of any other sensor inputs.

In view of the above, there is a need for a system and method that enables identification of greater portion of observable freespace area, even for complex road scenarios, without the need for more expensive computing power.

### SUMMARY OF INVENTION

In an aspect of the present invention, there is provided a method of estimating an unoccupied area around a sensor. The method includes measuring a radar point cloud of a scene around the sensor, using the sensor, identifying a set of clusters within the radar point cloud, defining a boundary around each cluster to obtain a set of inner hulls corresponding to the set of clusters, wherein each inner hull is formed by connecting a plurality of inner hull points, defining a global point cloud boundary around an outer limit of the radar point cloud to obtain an outer hull, wherein the outer hull is formed by connecting a plurality of outer hull points, identifying a plurality of connecting edges of the outer hull, wherein each connecting edge is present in the outer hull, and absent in the plurality of inner hulls, forming a freespace polygon by traversing through the plurality of inner hull points of each hull and the connecting edges, wherein the freespace polygon indicates the unoccupied area around the sensor.

In an embodiment of the present invention, the method further includes defining a concave hull type boundary around each cluster to obtain corresponding inner hull.

In an embodiment of the present invention, the method further includes defining a concave hull type boundary around the outer limit of the radar point cloud to obtain the outer hull.

In an embodiment of the present invention, the forming the freespace polygon comprises:
(i) traversing a first connecting edge in a first direction until an inner hull is reached;
(ii) traversing the inner hull in a direction opposite to the first direction until a next connecting edge is reached;
(iii) repeating (i) and (ii) until the first connecting edge is reached; and
(iv) appending the traversed connecting edges and inner hulls in an order in which they were traversed.

In an embodiment of the present invention, the method further includes dividing the scene around the sensor into a number of angular regions, wherein the number is greater than one; determining a freespace polygon for each angular region, and displaying or combining one or more freepsace polygons to determine the unoccupied area around the sensor.

In an embodiment of the present invention, the method further includes removing one or more inner hulls that do not share an edge with the outer hull; and incorporating the one or more inner hulls into the freespace polygon by adding an extra seam between one or more internal clusters and the freespace polygon.

In an embodiment of the present invention, the sensor is a millimetre wave automotive radar.

In an embodiment of the present invention, the sensor is a MIMO radar.

In another aspect of the present invention, there is provided a system of estimating an unoccupied area around a sensor. The system includes a memory to store one or more instructions; and a processor to execute the one or more instructions to measure a radar point cloud of a scene around the sensor, using the sensor, identify a set of clusters within the radar point cloud, define a boundary around each cluster to obtain a set of inner hulls corresponding to the set of clusters, wherein each inner hull is formed by connecting a plurality of inner hull points, define a global point cloud boundary around an outer limit of the radar point cloud to obtain an outer hull, wherein the outer hull is formed by connecting a plurality of outer hull points; identify a plurality of connecting edges of the outer hull, wherein each connecting edge is present in the outer hull, and absent in the plurality of inner hulls; form a freespace polygon by traversing through the plurality of inner hull points of each hull and the connecting edges, wherein the freespace polygon indicates the unoccupied area around the sensor.

There is also provided a computer program comprising program instructions for causing a computer program to carry out the above method which may be embodied on a record medium, carrier signal or read-only memory.

Various embodiments of the present invention enable identification of a greater portion of the observable freespace area in comparison to ray tracing methods. The assumptions about the structure of the road are removed, so freespace can be calculated for complex road scenarios. Further, computational complexity or the need for more expensive computing power is also reduced as the present invention does not use RANSAC estimates, and the point cloud is reduced to just the road boundaries. Furthermore, all points are considered, unlike outlier points which are removed when RANSAC is employed. The freespace boundary can therefore be easily split into physical road boundaries that are not traversable and partially observed boundaries which might have more freespace beyond them. This simplifies route planning algorithms which might also be used. The freespace algorithm of the present invention uses all identified points, unlike those that are unaccounted in existing systems. Further, as the calculations can be performed on radar-based point clouds, expensive or ineffective light based sensors such as cameras and LiDARs are no longer required.

### BRIEF DESCRIPTION OF DRAWINGS

The present invention will be more clearly understood from the following description of embodiments thereof, given by way of example only, with reference to the accompanying drawings, in which:-
FIG.1 illustrates a typical driving scene to explain the meaning of freespace;
FIG.2 shows a typical occupancy gridmap;
FIG.3a shows an example of the ray tracing method of identifying freespace;
FIG.3b shows an example of the freespace area identified using the ray tracing method of FIG.3a;

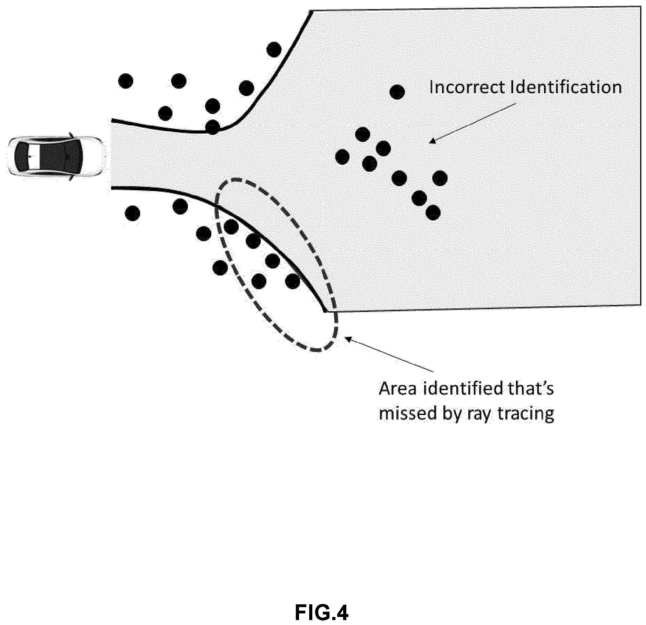

FIG.4 shows an example of a freespace calculation using RANSAC;
FIG.5 illustrates a method for detecting observable freespace area around an autonomous driving vehicle, in accordance with an embodiment of the present invention;
FIG.6A illustrates a top-down view of a sparsely populated point cloud;
FIG.6B illustrates detected clusters in the point cloud of FIG.6A;
FIG.6C illustrates the difference between a convex and concave hull boundary calculation;
FIG.6D(a) illustrates the detected clusters in the point cloud of FIG.6A with boundaries added;

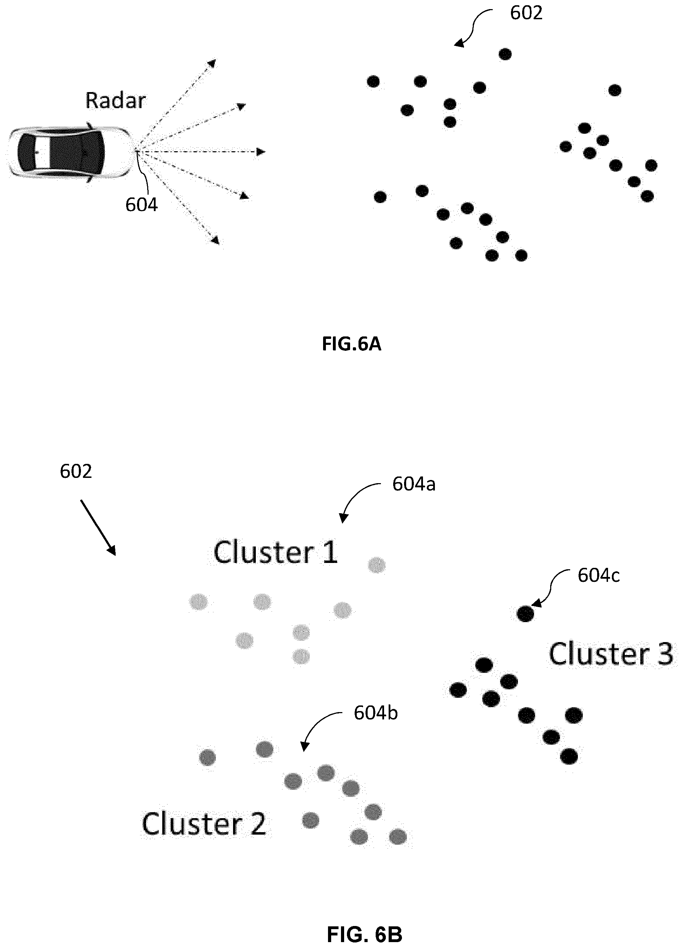

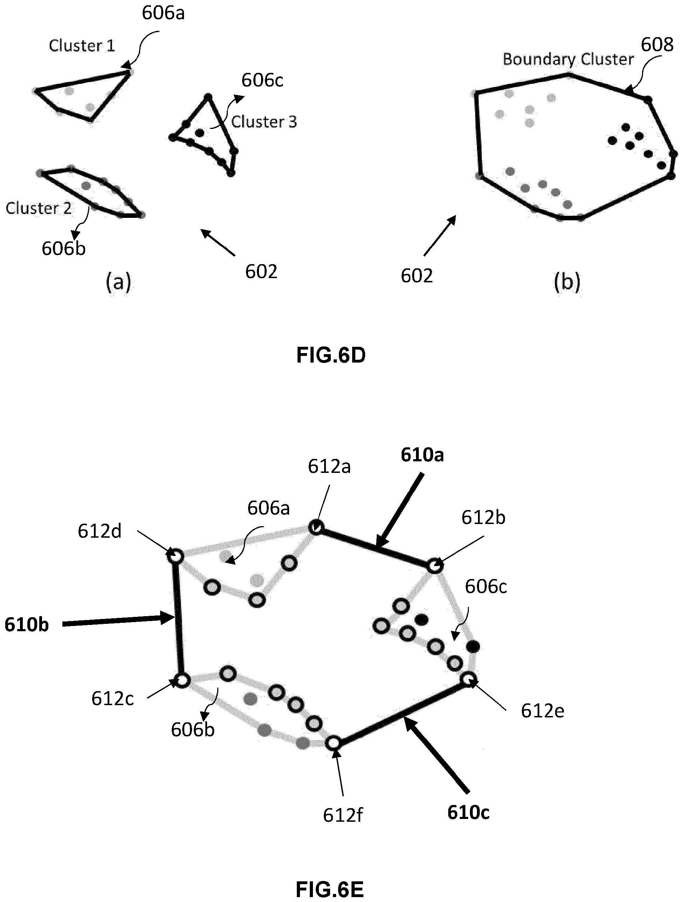

FIG.6D(b) illustrates the point cloud of FIG.6A with an outer boundary added, in accordance with an embodiment of the present invention;
FIG.6E is an illustration highlighting the connecting edges between inner hulls for the point cloud of FIG.6D(b) and shows start and end points (white) and identified edge points (grey);

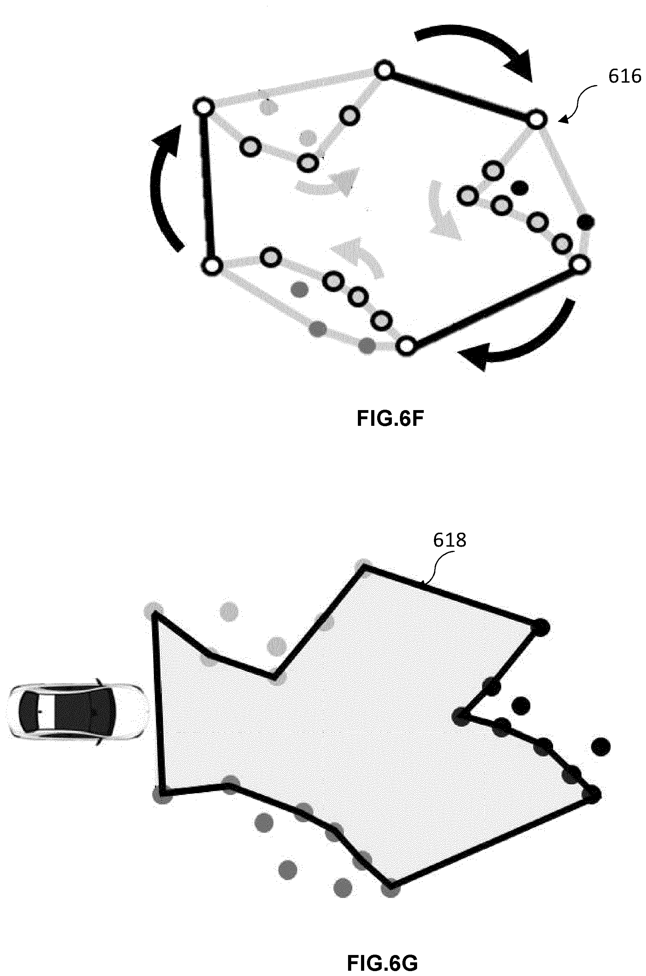

FIG.6F shows the CW (clockwise) direction used to traverse the outer hull and CCW (counter-clockwise) direction used to traverse the inner hulls when stitching the free space polygon;
FIG. 6G shows the resulting free space polygon of the point cloud shown in FIG.6A;

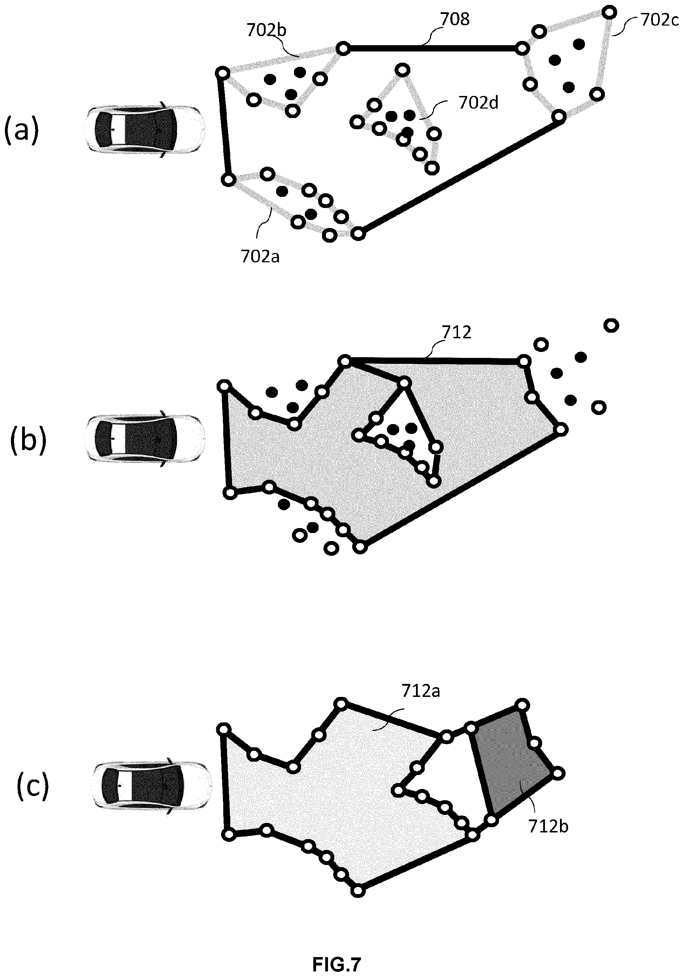

FIG. 7(a) shows the inner hulls and outer hull of a scene with an interior hull that does not share an edge with the outer hull;
FIG. 7(b) shows the formation of two outer hulls for the scene shown in FIG 7(a); and
FIG 7(c) shows the combining of freespace polygons in accordance with an embodiment of the current invention.

### DETAILED DESCRIPTION OF THE DRAWINGS

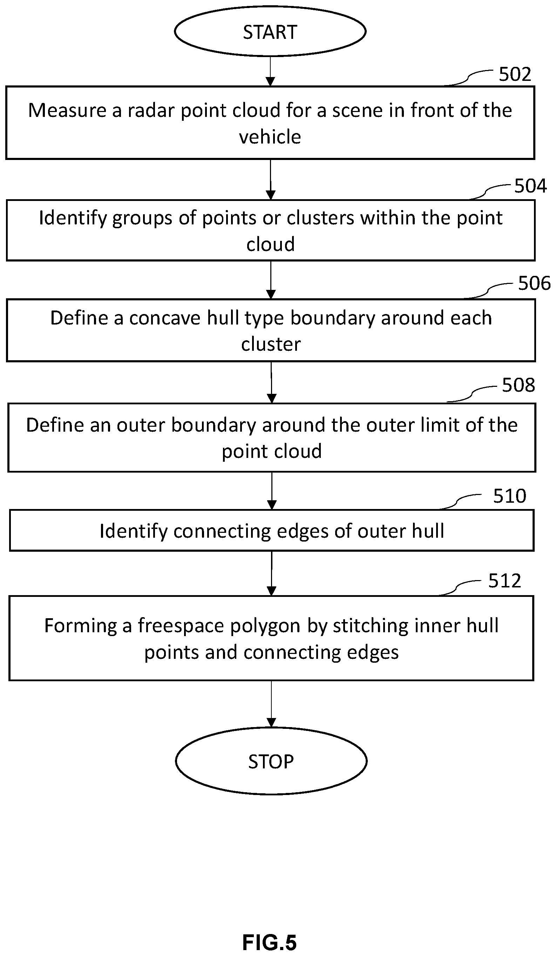

FIG.5 illustrates a method for detecting observable freespace area around an autonomous driving vehicle, in accordance with an embodiment of the present invention. It would be apparent to one of ordinary skill in the art, that the method can be employed in warehouse delivery robots or open-cast mining systems.

At step 502, a radar point cloud for a scene in front of a vehicle is measured using an automotive radar used on the vehicle. A top-down view of an exemplary radar point cloud 602 is illustrated with reference to FIG.6A. It is widely known to those related to the field that the radar detections from a Multiple Input Multiple Output (MIMO) radar 604, which comprises of measuring the magnitude and phase of the signal received at N receivers (multiple outputs) for each of M transmitters (multiple inputs), can be used to form a 'virtual' receive array that is larger than the physical receive array and thereby enables many object detections within a given area. These detections are commonly shown in the radar point cloud 602 which is a 3D graphical representation of the detection space or measured scene. By performing mathematical operations on these point clouds, it is possible to interpret this graphical representation into a more meaningful depiction of the measured scene. Such operations are known to include the clustering of groups of points into a single shape and identifying this as an object, classifying the type of object based on the size of the identified object and the number of detected points within it, identifying if the points are moving and at what speed and direction, and identifying if the immediate area around the radar is safe to move to. The identifying of the immediate area around the radar is safe to move on is commonly known as 'freespace estimation'.

Referring back to FIG.5, at step 504, groups of points or clusters within the point cloud 602 are identified. FIG.6B illustrates exemplary first, second and third clusters 604a, 604b and 604c identified in the radar point cloud 602. Although, three clusters are being shown herein, it would be apparent to one of ordinary skill in the art, that there may be more than three clusters present in the point cloud 602. The clustering is a well-known technique where algorithms such as DBScan are used and provides the first indication as to where the occupied areas in a scene might be. The first, second and third clusters 604a-604c are separated by gaps that may or may not be large enough for a vehicle to fit through.. As radar point clouds are naturally more dense at short ranges and less dense at long ranges, clusters from objects that are far away will appear to be less dense than if they appeared at a closer range as is normal from points plotted using a polar co-ordinate system. To rectify this, quadratic scaling of the range is often used to identify clusters at farther distances.

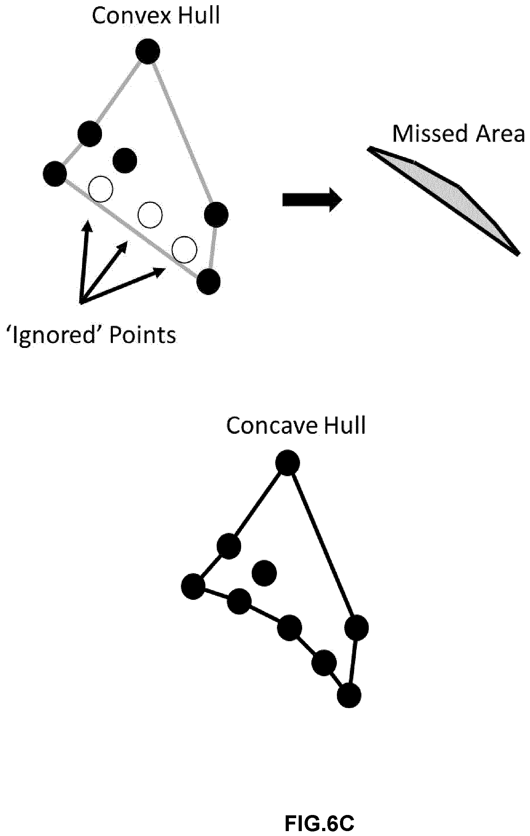

FIG. 6C explains the difference between a concave hull and convex hull type boundary calculation, where the third cluster 604c has boundaries added using both methods by way of example. The boundary of the third cluster 604c is estimated using a convex hall or concave hull (alpha shape) algorithm. A concave hull is a generalization of the concept of a convex hull. The concave hull preserves the boundary of shapes with concave details using a minimum radius between adjacent hull points, unlike convex hull that always give the minimum number of points to create a non-intersecting hull and therefore misses area.

Referring back to FIG.5, at step 506, a concave hull type boundary is defined, and drawn, around each of the first, second and third clusters 604a-604c. FIG.6D(a) illustrates the first, second and third clusters with first, second and third concave hull type inner boundaries 606a, 606b and 606c added respectively. Each boundary of the cluster is referred to as an inner hull. In each cluster, the boundary traverses through some points, referred to as inner hull points.

Referring back to FIG.5, at step 508, an outer boundary is defined around the outer limit of the point cloud 602. FIG.6D(b) illustrates the point cloud 602 with an exemplary global point cloud boundary 608 added. The global point boundary 608 is also hereinafter referred to as outer hull 608. The global point boundary 608 traverses through some points of the point cloud, referred to as outer hull points.

Referring back to FIG.5, at step 510, a plurality of connecting edges of the outer hull is identified, wherein each connecting edge is present in the outer hull and absent in the plurality of inner hulls. For clearly illustrating the connecting edges 610a-610c, the outer hull 608 is shown along with the inner hulls 606a-606c in FIG.6E. In an embodiment of the present invention, the outer hull points are matched with inner hull points to determine the connecting edges 610a-610c, as these edges are part of the outer hull 608, but absent in the inner hulls 606a-606c. The connecting edges 610a-610c are used to determine how the inner hulls 606a-606c are connected together, when the inner hulls 606a-606c are joined/stitched with the outer hull 608 later. Further, the start and end points of each connecting edge are identified. In an example, the connecting edge 610a has start and end points 612a and 612b, the connecting edge 610b has start and end points 612c and 612d.

Referring back to FIG.5, at step 512, a freespace polygon 616, shown in FIG.6F is formed by stitching the connecting edges 610a-610c, and inner hull points together. The stitching begins at a connecting edge. The connecting edge is traversed in a CW (clockwise) direction until an inner hull is reached. Then the inner hull is traversed in a CCW (counter-clockwise) direction until a connecting edge is reached. This is repeated until the first connecting edge is reached. The edges are appended in the order in which they were traversed to create the freespace polygon 618 shown in FIG.6G. This is done to ensure the correct side of the inner hulls is appended. The orientations could be reversed i.e. clockwise for inner, counter for outer.

FIG. 7(a) shows the inner hulls 702a-702d and outer hull 708 of a scene with an interior hull 702d that does not share points/edge/boundary with an outer hull 708 of corresponding point cloud, in accordance with an embodiment of the present invention, In an embodiment of the present invention, the scene around the sensor is formed of a number of angular regions, wherein the number is greater than one. Then, a freespace polygon is determined for each angular region, and one or more freepsace polygons are displayed or combined to determine the unoccupied area around the sensor. FIG. 7(b) shows the combining of freespace polygons according to one embodiment of the current invention. The described invention removes any internal clusters that do not share an edge with the outer boundary before estimating freespace. The internal clusters are incorporated back into the final freespace estimate by adding an extra seam between the internal cluster and the freespace estimate. The final freespace estimate 712 in FIG.7(b) incorporates the internal cluster 702 correctly.

In a 2^{nd} embodiment of the of the described invention, there is an inner hull that has more than one connecting edge. FIG.7(c) illustrates this scenario. The process is repeated for each separate area of freespace. The resulting freespace polygons 712a-712b are both filled and displayed (rather than being combined).

The described invention therefore uses all detected points to produce a more accurate freespace representation, while requiring a reduced computing complexity than prior art methods. Furthermore, it can be applied to all sensor systems unlike many prior art techniques which cannot be applied to radar outputs.

In the specification the terms "comprise, comprises, comprised and comprising" or any variation thereof and the terms include, includes, included and including" or any variation thereof are considered to be interchangeable, and they should all be afforded the widest possible interpretation and vice versa.

The invention is not limited to the embodiments hereinbefore described but may be varied in both construction and detail.

## Claims

1. A method of estimating an unoccupied area around a sensor, comprising:
measuring a radar point cloud of a scene around the sensor, using the sensor;
identifying a set of clusters within the radar point cloud;
defining a boundary around each cluster to obtain a set of inner hulls corresponding to the set of clusters, wherein each inner hull is formed by connecting a plurality of inner hull points;
defining a global point cloud boundary around an outer limit of the radar point cloud to obtain an outer hull, wherein the outer hull is formed by connecting a plurality of outer hull points;
identifying a plurality of connecting edges of the outer hull, wherein each connecting edge is present in the outer hull, and absent in the plurality of inner hulls;
forming a freespace polygon by traversing through the plurality of inner hull points of each hull and the connecting edges, wherein the freespace polygon indicates the unoccupied area around the sensor.

2. The method as claimed in claim 1, further comprising defining a concave hull type boundary around each cluster to obtain corresponding inner hull.

3. The method as claimed in any preceding claim, further comprising defining a concave hull type boundary around the outer limit of the radar point cloud to obtain the outer hull.

4. The method as claimed in any preceding claim, wherein the forming the freespace polygon comprises:
(v) traversing a first connecting edge in a first direction until an inner hull is reached;
(vi) traversing the inner hull in a direction opposite to the first direction until a next connecting edge is reached;
(vii) repeating (i) and (ii) until the first connecting edge is reached; and
(viii) appending the traversed connecting edges and inner hulls in an order in which they were traversed.

5. The method as claimed in claim 1, further comprising:
dividing the scene around the sensor into a number of angular regions, wherein the number is greater than one;
determining a freespace polygon for each angular region; and
displaying or combining one or more freepsace polygons to determine the unoccupied area around the sensor.

6. The method as claimed in claim 1 further comprising:
removing one or more inner hulls that do not share an edge with the outer hull; and
incorporating the one or more inner hulls into the freespace polygon by adding an extra seam between one or more internal clusters and the freespace polygon.

7. The method as claimed in any preceding claim, wherein the sensor is a millimetre wave automotive radar.

8. The method as claimed in any preceding claim, wherein the sensor is a MIMO radar.

9. A system of estimating an unoccupied area around a sensor, comprising:
a memory to store one or more instructions; and
a processor to execute the one or more instructions to:
measure a radar point cloud of a scene around the sensor, using the sensor;
identify a set of clusters within the radar point cloud;
define a boundary around each cluster to obtain a set of inner hulls corresponding to the set of clusters, wherein each inner hull is formed by connecting a plurality of inner hull points;
define a global point cloud boundary around an outer limit of the radar point cloud to obtain an outer hull, wherein the outer hull is formed by connecting a plurality of outer hull points;
identify a plurality of connecting edges of the outer hull, wherein each connecting edge is present in the outer hull, and absent in the plurality of inner hulls;
form a freespace polygon by traversing through the plurality of inner hull points of each hull and the connecting edges, wherein the freespace polygon indicates the unoccupied area around the sensor.
